# FASCICULE DE BREVET EUROPEEN

(11) **EP 2 310 248 B1**
(45) Date de publication et mention de la délivrance du brevet: **23.11.2016**
(21) Numéro de dépôt: 09804600.6
(22) Date de dépôt: 12.06.2009
(51) Int. Cl.: B62D 25/18, B62D 25/16, B62D 25/08, B60R 19/00, B60R 19/02

(54) **STRUCTURE DE LA PARTIE AVANT D'UN VEHICULE AUTOMOBILE ADAPTEE POUR LIMITER L'ENTREE D'EAU DANS TOUTE PARTIE DU MOTEUR SENSIBLE A L'EAU**
STRUKTUR FÜR DEN VORDEREN BEREICH EINES MOTORFAHRZEUGS ZUR BEGRENZUNG DES EINDRINGENS VON WASSER IN DIE WASSEREMPFINDLICHEN TEILE DES MOTORS
STRUCTURE FOR THE FORWARD PART OF A MOTOR VEHICLE SUITABLE FOR LIMITING THE INGRESS OF WATER INTO ANY WATER-SENSITIVE PART OF THE ENGINE

(30) Priorité: 05.08.2008 FR 0804459
(43) Date de publication de la demande: 20.04.2011
(73) Titulaire: Renault S.A.S., 92100 Boulogne-Billancourt (FR)
(72) Inventeur: BOGAERT, Philippe, F-78490 Les Mesnuls (FR); MASSOULIE-ALLAND, Juliette, F-78950 Gambais (FR); AHDADA, Khalid, F-78220 Viroflay (FR)
(86) Numéro de dépôt international: PCT/FR2009/051107
(87) Numéro de publication internationale: WO 2010/015759

(56) Documents cités:
- JP-A- 2005 193 807
- JP-U- 2 096 373
- JP-U- 2 136 784

## Description

La présente invention concerne une structure de la partie avant d'un véhicule automobile adaptée spécifiquement pour limiter l'entrée d'eau dans n'importe quel élément du moteur sensible à la présence d'eau en trop grande quantité (par exemple le conduit d'air admission moteur).

La structure de la partie avant d'un véhicule automobile comprend un bouclier avant, un passage de roue situé de chaque côté du véhicule derrière le bouclier avant et un écran de passage de roue qui s'étend entre un bord latéral du bouclier avant et une paroi qui sépare le passage de roue du compartiment moteur.

Cet écran de passage de roue est en principe destiné à empêcher le passage de l'eau projetée par la roue du véhicule située derrière cet écran.

Dans certains véhicules, le bouclier avant et l'un des écrans de passage de roue délimitent un espace dans lequel sont situées des pièces sensibles à la présence de l'eau telles que le conduit d'air moteur, des calculateurs.

Par ailleurs, la face intérieure du bouclier avant comporte un support dont un bord est sensiblement parallèle au bord latéral du bouclier avant et l'un des bords de l'écran de passage de roue est engagé avec jeu entre le bord latéral du bouclier avant et le bord de l'écran de passage de roue. Ce jeu facilite le montage de l'écran.

Le document JP 2005 193807 A décrit une partie avant d'un véhicule automobile conforme au préambule de la revendication et comprenant un bouclier avant et un passage de roue situé de chaque côté du véhicule derrière le bouclier, dans laquelle un tel jeu est prévu entre le bord latéral du bouclier avant et le bord de l'écran de passage de roue.

Les essais effectués par la demanderesse consistant à valider le fonctionnement véhicule en condition extrême : circulation d'un véhicule dans un gué d'une dizaine de centimètres de hauteur d'eau, ont montré que l'écran de passage de roue ne permettait pas d'éviter que de l'eau projetée par la roue du véhicule pénètre en trop grande quantité dans une zone à protéger de la présence d'eau et de ce fait entraîne la détérioration du moteur voire la panne de celui-ci.

Le document JP 02 096373 illustre également une partie avant d'un véhicule automobile comprenant un bouclier avant et un passage de roue situé de chaque côté du véhicule. Ce document présente un joint prévu directement sur le bord de l'écran de passage de roue, ce qui implique des contraintes de montage spécifiques.

Le but de la présente invention est de remédier à ces inconvénients de l'art antérieur. Ce but est atteint, selon l'invention, grâce à une structure de la partie avant d'un véhicule automobile tel que décrite dans la revendication 1.

Cette disposition préférée permet ainsi de réaliser une étanchéité entre le bord du bouclier et l'écran qui supporte les pressions et les vibrations engendrées lors de la circulation du véhicule sur une route inondée.

Les essais effectués par la demanderesse ont permis en effet de constater que le jeu précité était la cause du passage en trop grande quantité de l'eau vers l'espace dans lequel est située l'entrée d'air du conduit d'admission. Ce passage d'eau peut être favorisé par les pressions exercées sur l'écran de passage de roue et les vibrations qui tendent à augmenter le jeu en raison de l'élasticité des matières plastiques dans lesquelles sont réalisées le bouclier et l'écran. La suppression de ce jeu par un joint dans une zone proche de l'entrée d'air du conduit d'admission apporte ainsi une solution simple et efficace au problème qui est à la base de l'invention.

De préférence, la base de la section en U du joint est creuse et prend appui sur la face intérieure du bouclier avant.

Cette structure du joint facilite son montage et sa retenue sur le bord du support, tout en lui conférant de bonnes caractéristiques élastiques dans les directions d'applications des efforts et des vibrations.

Dans un mode de réalisation, ledit support comporte une aile qui est dirigée vers le bouclier, le joint étant disposé entre le bord de cette aile et le bouclier et le bord latéral du bouclier comporte un rebord s'étendant parallèlement à ladite aile du support, cette dernière prenant appui sur une face de l'écran pour mettre le bord de cet écran en appui sur le rebord du bouclier.

De préférence également, ledit support disposé sur la face intérieure du bouclier en regard d'un espace, délimité par le bouclier avant et l'autre des écrans de passage de roue, qui est dépourvu d'élément sensible à la présence d'eau, comporte des moyens pour empêcher la mise en place dudit joint.

Il est en effet inutile pour des raisons économiques de monter un tel joint sur le support situé dans l'espace où il n'est pas nécessaire d'empêcher une pénétration d'eau.

Le support disposé sur la face intérieure du bouclier peut être un support ayant d'autres fonctions, comme par exemple, le support du feu anti-brouillard.

D'autres particularités et avantages de l'invention apparaîtront encore tout au long de la description ci-après.

La pièce sensible à l'ingestion d'eau est ici à titre d'exemple un conduit d'admission moteur.

Aux dessins annexés, donnés à titre d'exemples, non limitatifs :
- la figure 1 est une vue en perspective partielle montrant l'intérieur du côté gauche d'un bouclier avant de véhicule automobile comportant un support, le joint pour rendre étanche le jeu entre le bord du bouclier et l'écran qui a été enlevé et le conduit d'air d'admission,
- la figure 2 est une vue schématique en coupe suivant le plan II-II de la figure 1,
- la figure 3 est une vue à plus grande échelle du détail A de la figure 2,
- la figure 4 est une vue en plan d'un support destiné à être fixé sur la face intérieure du bouclier sur le côté de celui-ci autre que celui représenté sur la figure 1.

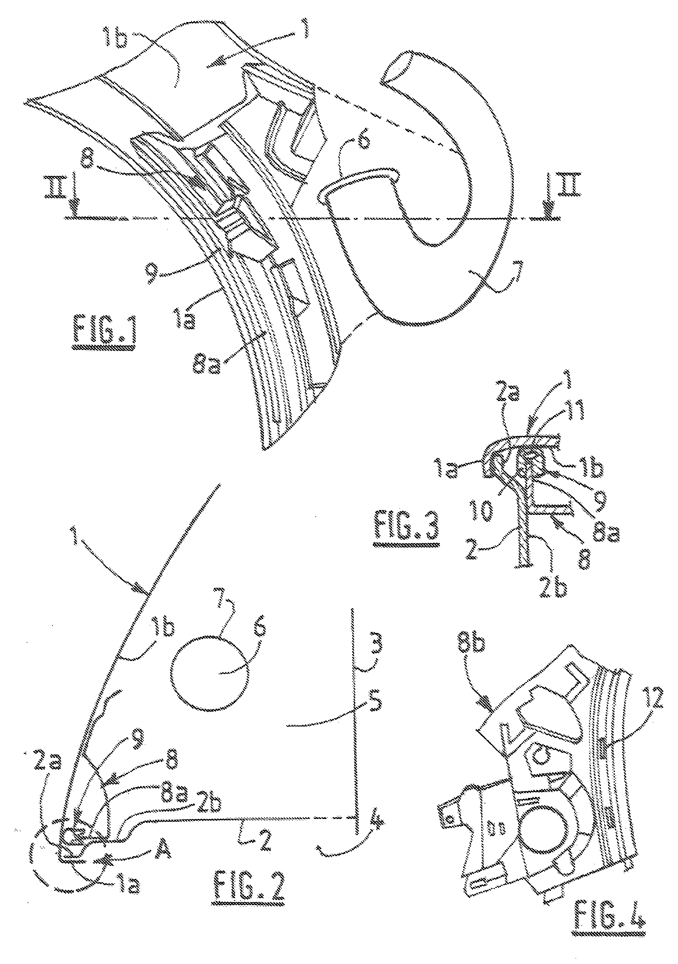

La figure 1 montre, vu de l'intérieur, un bouclier avant 1 s'étendant devant un passage de roue.

La figure 2 montre un écran de passage de roue 2 qui s'étend entre un bord latéral 1a du bouclier avant 1 et une paroi 3 qui sépare le passage de roue 4 du compartiment moteur.

Le bouclier avant 1 et l'écran de passage 2 délimitent un espace 5 dans lequel est située l'entrée d'air 6 du conduit 7 d'admission du moteur qui est également visible sur la figure 1.

Les figures 1 et 2 montrent également que la face intérieure 1b du bouclier avant 1 comporte un support 8 dont un bord 8a est sensiblement parallèle au bord latéral 1a du bouclier avant 1 et l'un des bords 2a de l'écran de passage de roue 2 est engagé avec jeu entre le bord latéral 1a du bouclier avant et le bord 8a du support 8.

Conformément à l'invention, un joint 9 est agencé pour supprimer le jeu ci-dessus dans une zone proche de l'entrée d'air 6 du conduit d'admission 7.

Autrement dit, le joint 9 s'étend le long du bord du passage de roue 2 suivant une certaine distance de façon que son extrémité inférieure soit située en dessous de l'entrée d'air 6 et que son extrémité supérieure soit située au-dessus de cette entrée d'air 6.

Les figures 2 et 3 montrent que le joint 9 est disposé entre la face intérieure 1b du bouclier avant 1 et le bord 8a du support 8 de telle sorte que ce joint 9 mette le support 8 en appui sur l'écran de passage de roue 2 et que le bord 2a de celui-ci s'appuie contre le bord latéral 1a du bouclier 1.

Le joint 9 est de préférence en matière souple et présente (voir notamment la figure 3) une gorge 10 de section transversale en U qui est engagée sur le bord 8a du support 8.

Par ailleurs, la base 11 de la section en U du joint 9 est creuse et prend appui élastiquement sur la face intérieure 1b du bouclier avant 1.

Les figures 2 et 3 montrent en outre, que le support 8 comporte une aile 8b qui est dirigée vers le bouclier 1, le joint 9 étant disposé entre le bord 8a de cette aile 8b et le bouclier 1 et le bord latéral 1a du bouclier 1 est constitué par un rebord s'étendant parallèlement à l'aile 8b du support 8.

Cette dernière prend appui sur une face 2b de l'écran 2 pour mettre le bord 2a de cet écran 2 en appui sur le rebord 1a du bouclier 1.

Ainsi, le joint 9 obture élastiquement non seulement le jeu existant entre le bord 8a du support 8 et la face intérieure du bouclier 1, mais assure également l'étanchéité entre le bord 2a du passage de roue 2 et le bord 1a du bouclier avant 1.

En conséquence, l'eau projetée par la roue, lorsque le véhicule circule sur une route inondée ne peut pas passer entre le bord 2a du passage de roue 2 et le bord 1a du bouclier avant 1 pour accéder à l'entrée d'air 6 du conduit d'admission 7.

De plus, grâce à la structure particulière du joint 9, l'étanchéité réalisée par celui-ci résiste aux pressions exercées sur l'écran 2 et aux vibrations engendrées du fait des projections d'eau sur cet écran.

Le support 8 fixé sur la face intérieure du bouclier avant 1 peut être le support d'un feu anti-brouillard ou d'un autre accessoire.

La figure 4 montre un support 8b par exemple de feu anti-brouillard identique au support représenté sur les figures 1 à 3 destiné à être fixé sur la face intérieure du bouclier 1 en regard d'un espace, délimité par le bouclier avant 1 et l'autre des écrans de passage de roue, qui est dépourvu d'élément sensible à la présence d'eau, mais comportant des moyens tels qu'une nervure 12 pour empêcher la mise en place d'un joint tel que le joint 8.

Un tel joint 8 est en effet inutile de ce côté du bouclier 1, car une pénétration d'eau par le jeu existant entre le bord du bouclier 1 et le bord de l'écran du passage de roue ne risque pas d'atteindre l'entrée d'air située de l'autre côté.

## Revendications

1. Structure de la partie avant d'un véhicule automobile comprenant un bouclier avant (1), un passage de roue (4) situé de chaque côté du véhicule derrière le bouclier avant (1), un écran de passage de roue (2) qui s'étend entre un bord latéral (1a) du bouclier avant (1) et une paroi (3) qui sépare le passage de roue (4) du compartiment moteur, le bouclier avant (1) et l'un des écrans de passage de roue (2) délimitant un espace (5) dans lequel est situé un élément (6, 7) sensible à la présence d'eau, la face intérieure du bouclier avant (1) comportant un support (8) dont un bord (8a) est sensiblement parallèle au bord latéral (1a) du bouclier avant (1) et l'un (2a) des bords de l'écran de passage de roue (2) est engagé avec jeu entre ledit bord latéral (1a) du bouclier avant (1) et le bord (8a) dudit support (8), **caractérisée en ce que** un joint (9) est agencé pour supprimer ledit jeu dans une zone proche de l'élément (6, 7) sensible à l'ingestion d'eau, ledit joint (9) est disposé entre la face intérieure (1b) du bouclier avant (1) et le bord (8a) du support (8), t ce dernier étant en appui sur l'écran de passage de roue (2) tandis que le bord (2a) du passage de roue (2) s'appuie contre le bord latéral (1a) du bouclier (1) afin de réaliser une étanchéité entre le bord latéral (1a) du bouclier et l'écran de passage de roue (2), ledit joint (9) étant en matière souple et présentant une gorge (10) de section transversale en U qui est engagée sur le bord (8a) du support (8).

2. Structure selon la revendication 1, **caractérisée en ce que** la base (11) de la section en U du joint (9) est creuse et prend appui sur la face intérieure (1b) du bouclier avant (1).

3. Structure selon la revendication 1 ou 2, **caractérisée en ce que** ledit support (8) comporte une aile qui est dirigée vers le bouclier (1), le joint (9) étant disposé entre le bord (8a) de cette aile et le bouclier (1) et le bord latéral (1a) du bouclier (1) comporte un rebord s'étendant parallèlement à ladite aile du support (8), cette dernière prenant appui sur une face (2b) de l'écran (2) pour mettre le bord (2a) de cet écran (2) en appui sur le rebord du bouclier (1).

4. Structure selon l'une des revendications 1 à 3, **caractérisée en ce que** le support (8b) disposé sur la face intérieure (1b) du bouclier (1) en regard d'un espace, délimité par le bouclier avant (1) et l'autre des écrans de passage de roue, qui est dépourvu d'élément sensible à la présence d'eau, comporte des moyens pour empêcher la mise en place dudit joint.

5. Structure selon l'une des revendications 1 à 4, **caractérisée en ce que** le support (8, 8b) est un support du feu anti-brouillard.

6. Structure selon l'une des revendications 1 à 5, **caractérisée en ce que** l'élément (6, 7) sensible à la présence d'eau est un conduit d'admission moteur.

## Patentansprüche

1. Aufbau des vorderen Bereichs eines Kraftfahrzeugs, der einen vorderen Stoßfänger (1), einen Radkasten (4), der sich auf jeder Seite des Fahrzeugs hinter dem vorderen Stoßfänger (1) befindet, und eine Radkastenblende (2) aufweist, die sich zwischen einem Seitenrand (1a) des vorderen Stoßfängers (1) und einer Wand (3) erstreckt, die den Radkasten (4) vom Motorraum trennt, wobei der vordere Stoßfänger (1) und eine der Radkastenblenden (2) einen Raum (5) begrenzen, in dem sich ein für das Vorhandensein von Wasser empfindliches Element (6, 7) befindet, wobei die Innenseite des vorderen Stoßfängers (1) einen Träger (8) aufweist, von dem ein Rand (8a) im Wesentlichen parallel zum Seitenrand (1a) des vorderen Stoßfängers (1) ist, und einer (2a) der Ränder der Radkastenblende (2) mit Spiel mit dem Seitenrand (1a) des vorderen Stoßfängers (1) und dem Rand (8a) des Trägers (8) in Eingriff ist, **dadurch gekennzeichnet, dass** eine Dichtung (9) gestaltet ist, um das Spiel in einer Zone nahe dem für die Aufnahme von Wasser empfindlichen Element (6, 7) zu beseitigen, die Dichtung (9) zwischen der Innenseite (1b) des vorderen Stoßfängers (1) und dem Rand (8a) des Trägers (8) angeordnet ist, wobei letzterer auf der Radkastenblende (2) aufliegt, während der Rand (2a) des Radkastens (2) sich gegen den Seitenrand (1a) des Stoßfängers (1) anlegt, um eine Dichtheit zwischen dem Seitenrand (1a) des Stoßfängers und der Radkastenblende (2) herzustellen, wobei die Dichtung (9) aus geschmeidigem Material ist und eine Rille mit U-förmigem Querschnitt (10) aufweist, die auf dem Rand (8a) des Trägers (8) in Eingriff ist.

2. Aufbau nach Anspruch 1, **dadurch gekennzeichnet, dass** die Basis (11) des U-förmigen Querschnitts der Dichtung (9) hohl ist und auf der Innenseite (1b) des vorderen Stoßfängers (1) aufliegt.

3. Aufbau nach Anspruch 1 oder 2, **dadurch gekennzeichnet, dass** der Träger (8) einen Flügel aufweist, der zum Stoßfänger (1) gerichtet ist, wobei die Dichtung (9) zwischen dem Rand (8a) dieses Flügels und dem Stoßfänger (1) angeordnet ist, und der Seitenrand (1a) des Stoßfängers (1) eine Randleiste aufweist, die sich parallel zum Flügel des Trägers (8) erstreckt, wobei letzterer sich auf eine Seite (2b) der Blende (2) auflegt, um den Rand (2a) dieser Blende (2) auf die Randleiste des Stoßfängers (1) zu drücken.

4. Aufbau nach einem der Ansprüche 1 bis 3, **dadurch gekennzeichnet, dass** der auf der Innenseite (1b) des Stoßfängers (1) gegenüber einem vom vorderen Stoßfänger (1) und der anderen der Radkastenblenden begrenzten Raum, der nicht das für das Vorhandensein von Wasser empfindliche Element aufweist, angeordnete Träger (8b) Einrichtungen aufweist, um das Einsetzen der Dichtung zu verhindern.

5. Aufbau nach einem der Ansprüche 1 bis 4, **dadurch gekennzeichnet, dass** der Träger (8, 8b) ein Träger des Nebelscheinwerfers ist.

6. Aufbau nach einem der Ansprüche 1 bis 5, **dadurch gekennzeichnet, dass** das für das Vorhandensein von Wasser empfindliche Element (6, 7) ein Motoransaugkanal ist.

## Claims

1. Motor vehicle front part structure comprising a front bumper (1), a wheel housing (4) situated on either side of the vehicle behind the front bumper (1), a wheel housing screen (2) which extends between a lateral edge (1a) of the front bumper (1) and a wall (3) which separates the wheel housing (4) from the engine compartment, the front bumper (1) and one of the wheel housing screens (2) delimiting a space (5) in which an element (6, 7) sensitive to the presence of water is situated, the inner face of the front bumper (1) comprising a support (8) of which an edge (8a) is substantially parallel to the lateral edge (1a) of the front bumper (1) and one (2a) of the edges of the wheel housing screen (2) is engaged with clearance between the said lateral edge (1a) of the front bumper (1) and the edge (8a) of the said support (8), **characterized in that** a seal (9) is arranged to eliminate the said clearance in a region close to the element (6, 7) sensitive to the ingestion of water, the said seal (9) is arranged between the inner face (1b) of the front bumper (1) and the edge (8a) of the support (8), the latter bearing on the wheel passage screen (2) while the edge (2a) of the wheel housing (2) bears against the lateral edge (1a) of the bumper (1) in order to provide sealing between the lateral edge (1a) of the bumper and the wheel passage screen (2), the said seal (9) being made of flexible material and having a groove (10) of U-shaped cross section which is engaged on the edge (8a) of the support (8).

2. Structure according to Claim 1, **characterized in that** the base (11) of the U-shaped cross section of the seal (9) is hollow and bears on the inner face (1b) of the front bumper (1).

3. Structure according to Claim 1 or 2, **characterized in that** the said support (8) comprises a wing which is directed towards the bumper (1), the seal (9) being arranged between the edge (8a) of this wing and the bumper (1) and the lateral edge (1a) of the bumper (1) comprises a shoulder extending parallel to the said wing of the support (8), this wing bearing on a face (2b) of the screen (2) in order to bring the edge (2a) of this screen (2) to bear on the shoulder of the bumper (1).

4. Structure according to one of Claims 1 to 3, **characterized in that** the support (8b) arranged on the inner face (1b) of the bumper (1) opposite a space, delimited by the front bumper (1) and the other of the wheel housing screens, which is devoid of an element sensitive to the presence of water, comprises means for preventing the fitting of the said seal.

5. Structure according to one of Claims 1 to 4, **characterized in that** the support (8, 8b) is a fog lamp support.

6. Structure according to one of Claims 1 to 5, **characterized in that** the element (6, 7) sensitive to the presence of water is an engine intake duct.
